Europäisches Patentamt

European Patent Office

Office européen des brevets

(11) Numéro de publication: **0 293 538**
**A1**

## (12) DEMANDE DE BREVET EUROPEEN

(21) Numéro de dépôt: **87480001.4**

(22) Date de dépôt: **04.06.87**

(51) Int. Cl.⁴: **B63B 1/38**

(43) Date de publication de la demande:
**07.12.88 Bulletin 88/49**

(84) Etats contractants désignés:
**AT BE CH DE ES GB GR IT LI LU NL SE**

(71) Demandeur: **Guibernao, Charles**
**58 b Bd Paul Montel**
**F-06200 NICE(FR)**

(72) Inventeur: **Guibernao, Charles**
**58 b Bd Paul Montel**
**F-06200 NICE(FR)**

(74) Mandataire: **Hautier, Jean-Louis**
**Cabinet Hautier Office Méditerranéen de**
**Brevets d'Invention et de Marques 24 rue**
**Masséna**
**F-06000 Nice(FR)**

(54) **Dispositif de réduction du frottement d'une côque de bateau.**

㉗ Dispositif pour créer une couche d'air entre la partie immergée de la coque et l'eau afin d'améliorer la glisse de la coque d'un bateau.

De l'air à pression atmosphérique pré-filtré est capté par un système de daurade (8) branché sur deux canalisations principales (1) placées dans les hauts de la coque (6) ; desdites canalisations principales (1) sont issus, munis de valves anti-retour (2) pour chacun, des tubes (3) dont leur partie courante peut être insérée dans la structure ; lesdits tubes (3) descendent alimenter des diffuseurs (5) qui viennent déboucher à fleur de coque dans la zone immergée de ladite coque.

Dispositifs pour tous types de bateaux.

EP 0 293 538 A1

FIG 1

## Dispositif de réduction du frottement d'une côque de bateau.

La présente invention concerne un système de dispositifs pour les coques de tous types de navigation maritime et/ou fluviale.

L'état de la technique présente est défini par les brevets suivants :

Brevet FR.A 367.263

Ce brevet décrit une invention sur un dispositif pour accélérer la marche des navires et pour les gouverner ; le dispositif utilise un moyen de récupération et de centralisation de l'air ou de gaz et/ou de fumée de cheminée avec un système de refoulement vers un dispositif de ventilation en poupe, en vue de surmonter la succion produite par le mouvement en avant du navire. Il y a une chambre de chauffe, le fluide est dirigé sous la ligne de flottaison d'avant en arrière au niveau de la poupe ; les tuyères protégées par des plaques forment un dispositif rapporté à la coque et saillant en extérieur.

Brevet FR.A. 1.592.995

Ce brevet consiste en une combinaison d'injection par compresseur et/ou par une batterie de bouteille de gaz sous pression refoulé à l'extérieur au moyen de canalisations sur lesquelles sont fixés, en chaîne, des tubes saillant de la coque, de la proue à la poupe.

Brevet FR.A. 842.375

Ce brevet concerne un dispositif permettant l'amortissement élastique aux masses d'eau venant frapper la coque pour créer ou favoriser l'établissement d'un matelas élastique d'air ou d'émulsion, par des redents alimentés par des gaz sous pression ou par soufflerie.

Ce système freine la glisse contrairement à l'exposé de la présente invention. Il s'applique notamment aux hydravions.

La présente invenion concerne un système de dispositifs pour amélioration de la glisse par lubrification de la couche limite, atténuant ainsi les phénomènes de freinage provoqués par le frottement de la zone de surface immergée des coques navigantes.

Le système de dispositifs selon l'invention permet une augmentation de la vitesse, pour une puissance propulsive constante ou, à vitesse constante, la diminution de la puissance propulsive.

De l'air à pression atmosphérique pré-filtré est capté par un système daurade de daurade branché sur deux canalisations principales placées dans les hauts de la coque ; desdites canalisations principales sont issus, munis de valves anti-retour pour chacun, des tubes dont leur partie courante peut être insérée dans la structure ; lesdits tubes descendent alimenter des diffuseurs qui viennent déboucher à fleur de coque dans la zone immergée de ladite coque.

Les diffuseurs ont une forme demi ovoïde et ont pour fonction de produire une émulsion par réaction naturelle de combinaison aérodynamique et hydrodynamique lors de leur déplacement par la coque dans l'eau, il se produit en leur centre une dépression qui provoque l'aspiration de l'air brassé par les turbulences de l'eau et ce même point donne l'émulsion diminuant la densité, et la viscosité par les microbulles ainsi obtenues lubrifie la couche limite.

Cette émulsion canalisée, guidée par les lèvres longitudinales disposées de chaque côté des diffuseurs en chaîne sur toute ou partie immergée de la coque.

Le système de dispositifs selon l'invention, dont les diffuseurs sont à fleur de coque, peut être inséré à la structure de la coque ou rapporté sur une coque existante en constituant une nouvelle structure qui donnera renfort et rigidité à celle-ci.

Il est donné à titre d'exemple non limitatif un mode de réalisation se référant aux dessins des planches ci-annexées.

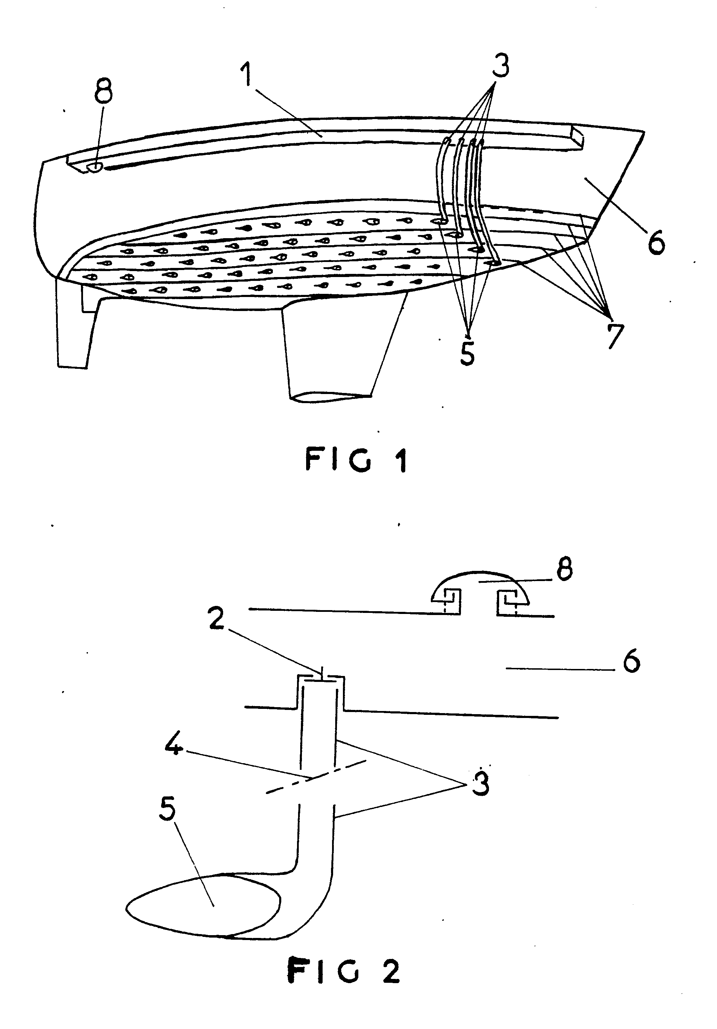

La figure 1 est une vue en perspective de la coque 6 comprenant, dans le haut tribord, la canalisation principale 1 munie de son système de daurade 8 prévu pour la fitration de l'air ; de ladite canalisation partent les tubes 3, par leur partie 4 insérée dans la structure, ils descendent jusqu'aux diffuseurs 5 à fleur de coque dans la zone immergée de ladite coque. Lesdits diffuseurs sont répartis longitudinalement entre les lèvres 7 elles-mêmes longitudinales à l'axe de la coque 6.

La figure 2 représente la canalisation 1 avec son système de daurade 8 et les valves 2 anti-refoulement pour chaque tube 3 avec leur partie 4 fixée aux diffuseurs 5.

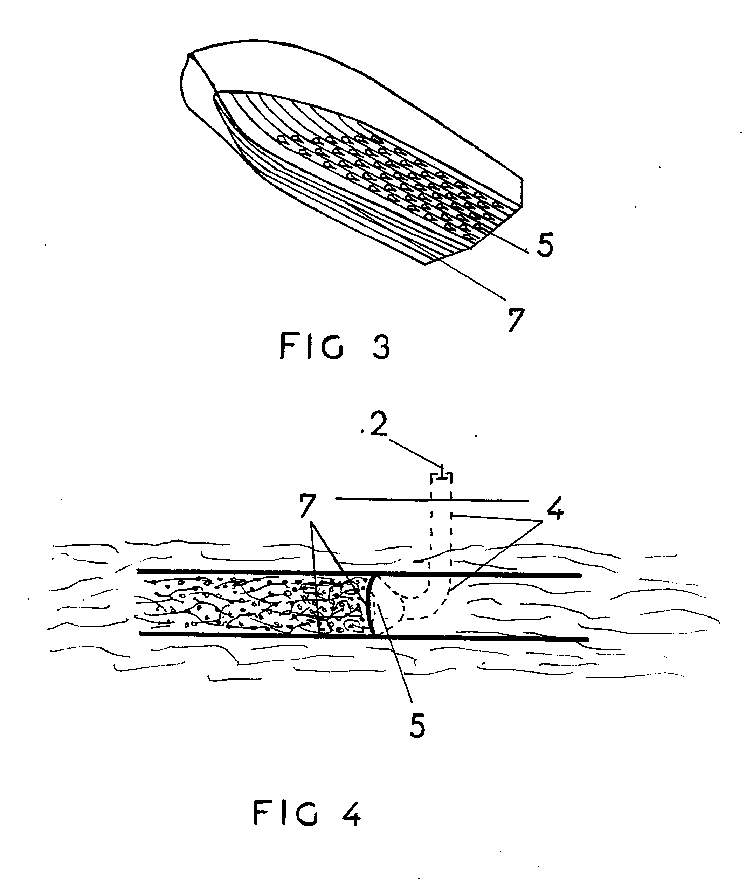

La figure 3 représente une visualisation de la répartition sur toute ou partie de la zone immergée des diffuseurs 5 disposés longitudinalement avec les lèvres 7.

La figure 4 représente une valve 2, partie 4 aboutissant au diffuseur 5 avec visualisation de l'écoulement émulsif canalisé par les lèvres 7.

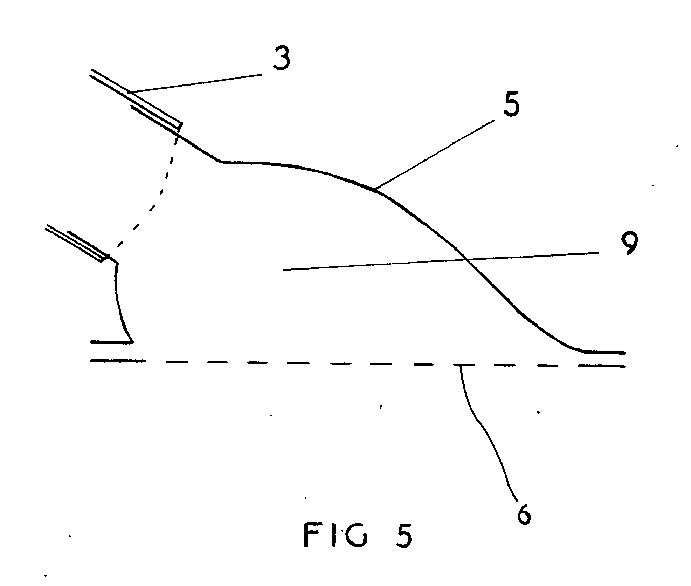

La figure 5 représente le tube 3 fixé au diffuseur 5 en son centre 9 où est produit la combinaison aérodynamique et hydrodynamique créant la dépression aspirante d'air avec son malaxage par les turbulences de l'eau en ce même point, forment l'émulsion à microbulles lubrifiant la couche limite par le glissement de la coque sur ladite émulsion.

**Revendications**

1. Dispositif pour créer une couche d'air entre la partie immergée de la coque et l'eau afin d'améliorer la glisse de la coque d'un bateau comportant une pluralité de moyens d'injection tels que des conduits rapportés solidaires des parois de la coque qui débouchent sur toute la surface du bateau en dessous de la ligne de flottaison caractérisé par le fait

que de l'air à pression atmosphérique pré-filtré est capté par un système de daurade (8) branché sur deux canalisations principales (1) placées dans les hauts de la coque (6) ; desdites canalisations principales (1) sont issus, munis de valves anti-retour (2) pour chacun, des tubes (3) dont leur partie courante peut être insérée dans la structure ; lesdits tubes (3) descendent alimenter des diffuseurs (5) qui viennent déboucher à fleur de coque dans la zone immergée de la coque.

2. Dispositif selon la revendication 1 caractérisé par le fait

que les diffuseurs (5) affleurent la coque (6) dans la zone immergée répartie longitudinalement entre les lèvres (7) elles-mêmes longitudinales à l'axe de la coque (6).

3. Dispositif selon l'une quelconque des revendications 1 ou 2 caractérisé par le fait

que les diffuseurs (5) ont une forme demi ovoïde et ont pour fonction de produire une émulsion par réaction naturelle de combinaison aérodynamique et hydrodynamique lors de leur déplacement par la coque (6) dans l'eau, il se produit en leur centre une dépression qui provoque l'aspiration de l'air brassé par les turbulences de l'eau et ce même point donne l'émulsion diminuant la densité et la viscosité par les microbulles ainsi obtenues lubrifie la couche limite.

4. Dispositif selon la revendication 3 caractérisé par le fait

que l'émulsion est canalisée, guidée par les lèvres longitudinales (7) disposées de chaque côté des diffuseurs (5) en chaîne sur toute ou partie immergée de la coque.

5. Dispositif selon la revendication 3 caractérisé par le fait

que le système de dispositifs dont les diffuseurs sont à fleur de coque (6), peut être inséré à la structure de la coque (6) ou rapporté sur une coque (6) existante en constituant une nouvelle structure qui donnera renfort et rigidité à celle-ci.

6. Dispositif selon l'une quelconque des revendications 1, 2, 3, 4 ou 5 caractérisé par le fait

que la coque (6) comprenant, dans le haut tribord, la canalisation (1) munie de son système de daurade (8) prévu pour la filtration de l'air ; de ladite canalisation partent les tubes (3), par leur partie (4) insérée dans la structure, descendent jusqu'aux diffuseurs (5).

FIG 1

FIG 2

FIG 3

FIG 4

FIG 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| P | FR-A-2 591 180 (GUIBERNAO) <br> * En entier * <br> --- | 1-5 | B 63 B 1/38 |
| A | FR-A-1 592 995 (DELFAULT) <br> * Page 3, ligne 14 - page 5, ligne 12; figures 1-6 * <br> --- | 1,2,4,5 | |
| A | FR-A- 394 925 (SIMS) <br> * Page 2, lignes 4-52; figures 1-5 * <br> --- | 1,3 | |
| A | FR-A- 842 375 (BUGATTI) <br> * Page 2, lignes 44-98; figures 1-5 * <br> --- | 1 | |
| A | FR-A- 367 263 (WITTMANN STRASSMAN CO.) <br> ----- | | |

**DOMAINES TECHNIQUES RECHERCHES (Int. Cl.4)**

B 63 B

Le présent rapport a été établi pour toutes les revendications

| Lieu de la recherche | Date d'achèvement de la recherche | Examinateur |
|---|---|---|
| LA HAYE | 21-06-1988 | VOLLERING J.P.G. |